# EUROPÄISCHE PATENTSCHRIFT

(11) **EP 1 777 062 B1**
(45) Veröffentlichungstag und Bekanntmachung des Hinweises auf die Patenterteilung: **12.08.2015**
(21) Anmeldenummer: 06021034.1
(22) Anmeldetag: 06.10.2006
(51) Int. Cl.: B29C 69/00, B29C 45/16, B29C 65/20, F02M 35/10, B29L 31/30, B29L 23/00, B29L 23/18

(54) **Verfahren und Vorrichtung zum Verschweissen von Kunststoffhohlkörpern**
Process and device for welding plastic hollow bodies
Procédé et dispositif pour souder des corps creux en matière plastique

(30) Priorität: 21.10.2005 DE 102005050571
(43) Veröffentlichungstag der Anmeldung: 25.04.2007
(73) Patentinhaber: Bayerische Motoren Werke Aktiengesellschaft, 80809 München (DE)
(72) Erfinder: Feichtenschlager, Nikolaus, 5280 Braunau (AT); Junger, Andreas, 5131 Franking (AT); Auzinger, Christian, 4963 St. Peter/Hart (AT); Seidl, Philipp, 4963 St. Peter/Hart (AT); Katzlberger, Erich, 4931 Mettmach (AT); Nagel, Dieter, 76307 Karlsbad-Langensteinbach (DE); Eisterlehner, Leopold, 4594 Steinbach/Stayr (AT); Zaleschak, Hannes, 4052 Ansfelden (AT)

(56) Entgegenhaltungen:
- EP-A2- 1 219 406
- SU-A1- 423 668
- US-A- 4 872 935

## Beschreibung

Die vorliegende Erfindung betrifft ein Verfahren sowie eine Vorrichtung zum Verschweißen von zwei oder mehreren, in Spritzgießtechnik hergestellten Rohrabschnittshälften zu einem Rohrabschnitt, vorzugsweise zur Ausbildung von Rohrabschnitten zur Luftführung für Brennkraftmaschinen.

Derartige Rohrabschnitte zur Luftführung können beispielsweise Ansaugrohre, Saugrohrmodule, Verbindungsrohre zwischen Turboladern und der Brennkraftmaschine, Filterrohre oder dergleichen Elemente sein.

Eine in der Fachwelt gebräuchliche Verfahrensweise zur Herstellung derartiger Kunststoffform- bzw. Kunststoffhohlkörper in Spritzgießtechnik ist beispielsweise aus der DE-OS 197 01 118 bekannt. Bei dieser bekannten, die Gattung der vorliegenden Erfindung bildenden Verfahrensweise werden zwei Halbschalen in Spritzgießtechnik hergestellt und über Kunststoffschweißtechnik miteinander verbunden.

Die Ausbildung der zu verbindenden Form- oder Hohlkörperelemente als Halbschalen eröffnet eine Vielzahl von Gestaltungsmöglichkeiten, lässt sich aufgrund des Einsatzes von gleichem Material für beide Halbschalen gut verschweißen und führt zu einem sehr stabilen Kunststoffform- bzw. Kunststoffhohlkörper.

Für bestimmte Anwendungsbereiche ist es wünschenswert, einen Rohrabschnitt aus Kunststoffmaterialien mit verschiedenen Eigenschaften herzustellen, d.h. die Rohrabschnitte unterscheiden sich z.B. im Hinblick auf ihre thermischen oder optischen Eigenschaften oder im Hinblick auf ihre Beständigkeit gegenüber verschiedenen Medien.

Auch kann es wünschenswert sein, harte und weiche Kunststoffmaterialien, d.h. verschiedene Komponenten in einem Rohrabschnitt zu vereinigen. Dies kann beispielsweise bei Rohrkonstruktionen der Fall sein, bei denen - wie bei Verbindungsrohren zwischen Turboladern und Brennkraftmaschinen - ein Teil der Rohrkonstruktion fahrzeugfest und ein anderer Teil beweglich gelagert sein muss. Hierzu werden in aller Regel so genannte Balgabschnitte vorgesehen, die aus relativ weichem Kunststoffmaterial bestehen, an das sich hartes Kunststoffmaterial zu beiden Seiten anschließt. Derartige Rohrkonstruktionen werden beispielsweise zur Verringerung bzw. zur Vermeidung von Vibrations- und Schallübertragungseffekten eingesetzt.

Harte und weiche Kunststoffmaterialien, d.h. harte und weiche Komponenten können zu einstückigen Kunststoffform- bzw. Kunststoffhohlkörpern in so genannter Blasformtechnik geformt werden. Dieser Technik sind allerdings hinsichtlich der Formgebung Grenzen gesetzt. Kunststoffform- bzw. Kunststoffhohlkörper komplexer Form mit Hinterschneidungen, Ansätzen oder seitlich auskragenden Bereichen können mit Blasformtechnik nicht oder nur mit erheblichem fertigungstechnischen und verfahrenstechnischen Aufwand hergestellt werden.

Außer in Blasformtechnik können harte und weiche Kunststoffmaterialien grundsätzlich auch in der eingangs genannten Spritzgießtechnik geformt werden. Dabei werden bisher die harten und die weichen Kunststoffmaterialien, d.h. die harten und die weichen Komponenten jeweils separat hergestellt und im Anschluss daran zu einem einheitlichen Gegenstand miteinander verschweißt. Bei Kunststoffform- bzw. Kunststoffhohlkörpern komplexer Form ist dieser Verschweißvorgang allerdings sehr aufwändig und erfordert einen erheblichen vorrichtungstechnischen Aufwand.

Aus SU 423 668 A1 ist bekannt, thermoplastische Rohre stirnseitig durch Erhitzen miteinander zu verbinden. Um die verbundenen Rohre im Bereich der Verbindungsstelle zu verstärken, werden zylindrische Ringe aus thermoplastischem Material mit guten Schweißeigenschaften an den Enden der Rohre angebracht, bevor diese miteinander verbunden werden.

EP 1 219 406 A2 offenbart eine Vorrichtung zum Verschweißen von thermoplastischem Material, wobei eine Wärmequelle mehrere erhitzte Oberflächen aufweist, die Stoßflächen des thermoplastischen Materials auf eine vorbestimmte Temperatur erhitzen, um diese miteinander verbinden zu können.

Aufgabe der vorliegenden Erfindung ist es, eine neuartige Verfahrensweise zur Verfügung zu stellen, mit der hinsichtlich der Formgebung sehr komplexe Rohrabschnittshälften mittels eines einfachen Schweißprozesses ohne hohen fertigungstechnischen Aufwand miteinander verbunden werden können.

Diese Aufgabe wird dadurch gelöst, dass die miteinander zu verschweißenden Rohrabschnittshälften im Bereich der Verbindungsstellen durch Anpressen von auf die Schmelztemperatur der jeweiligen Komponente erhitzten Kontaktelementen aufgeschmolzen und im Anschluss daran unter Einwirkung eines Pressdruckes zusammengeführt werden.

Während bei bekannten Verfahren stets die Anordnung von Schweißzonen oder Schweißebenen im Übergangsbereich von einer auf die andere Komponente erforderlich sind, werden erfindungsgemäß für jeden Schweißbereich Kontaktelemente eingesetzt, die hinsichtlich ihrer Schmelztemperatur auf die jeweilige Komponente eingestellt sind und beliebig an der jeweils erforderlichen Verbindungsstelle angeordnet werden können.

Aufgabe der vorliegenden Erfindung ist es ferner, eine Vorrichtung zur Verfügung zu stellen, mit der das erfindungsgemäße Verfahren auf einfache Weise realisiert werden kann.

Diese Aufgabe wird erfindungsgemäß dadurch gelöst, dass die in Mehrkomponentenspritzgießtechnik hergestellten und miteinander zu verschweißenden Rohrabschnittshälften jeweils aus mindestens zwei Abschnitten (3, 4, 5) aus Kunststoff mit unterschiedlicher Härte und Schmelztemperatur bestehen und jeweils in einer Aufnahme im Abstand zueinander gehalten, auf unterschiedliche Schmelztemperaturen gebrachte Kontaktelemente jeweils gleichzeitig in den Bereich der Verbindungsstellen der Rohrabschnittshälften eingefahren und zur Anlage an den Verbindungsstellen gebracht werden, nach Abschluss des Aufschmelzvorganges ausgefahren und im Anschluss daran zum Zusammenfügen und zum Aufbringen des Pressdruckes die Aufnahmen zusammengefahren werden.

Da die Kontaktelemente entsprechend der aufzuschmelzenden Komponente unterschiedliche Temperaturen aufweisen müssen, ist es vorteilhaft, zwischen den Kontaktelementen Isolierbereiche anzuordnen. Diese Isolierbereiche können in der verschiedensten Weise gestaltet sein. So können zwischen den Kontaktelementen geeignete Isoliermittel oder Isolierstoffe angeordnet werden. Diese können gegebenenfalls in die einander zugewandten Stirnseiten der Kontaktelemente integriert werden. Bei geringeren Temperaturdifferenzen kann es bereits ausreichen, zwischen den Kontaktelementen einen Luftspalt vorzusehen.

Grundsätzlich können die Aufnahmen in jeder beliebigen Weise ausgestaltet sein. Wesentlich ist lediglich, dass eine sichere Halterung der Rohrabschnittshälften beim Aufschmelzvorgang und beim anschließenden Pressvorgang sichergestellt ist. Auch müssen die Halterungen derart gestaltet sein, dass sie auf einfache Weise auseinander- und zusammengefahren werden können und sichergestellt ist, dass die Kontaktelemente zur Durchführung des Aufschmelzvorganges an den jeweiligen Verbindungsstellen zur Anlage gebracht werden können.

Bei einer besonders bevorzugten Ausführungsform sind die Aufnahmen block- oder wannenartig ausgebildet und auf ihren einander zugewandten Seiten mit Ausnehmungen ausgestattet, die zumindest abschnittweise die Negativform der aufzunehmenden Rohrabschnittshälften aufweisen. Eine derartige Ausgestaltung garantiert eine formschlüssige und deshalb sichere Halterung der zu verbindenden Rohrabschnittshälften.

Um bei einer Schrägstellung oder Überkopflage der block- oder wannenartigen Aufnahmen ein Herausfallen der aufzunehmenden Rohrabschnittshälften zu vermeiden, ist es vorteilhaft, Spann- bzw. Halteelemente vorzusehen, die für den Be- bzw. Entladevorgang ausschwenkbar sind.
Im Folgenden ist zur weiteren Erläuterung und zum besseren Verständnis der Erfindung das Verfahren und die Vorrichtung zur Durchführung des Verfahrens am Beispiel der Herstellung eines Kunststoffform- bzw. Kunststoffhohlkörpers in Form eines aus zwei Rohrabschnittshälften bestehenden Reinluftrohres zur Luftzuführung bei Brennkraftmaschinen näher beschrieben und erläutert.
- Figur 1: zeigt ein Ausführungsbeispiel eines Reinluftrohres im fertigen, d.h. in einem Zustand, in dem die beiden Rohrabschnittshälften bereits miteinander verschweißt sind,
- Figur 2: zeigt in einer stark schematisierten Darstellung den grundsätzlichen Aufbau einer Vorrichtung, bei der die miteinander zu verschweißenden Rohrabschnittshälften des herzustellenden Reinluftrohres zur Durchführung des erfindungsgemäßen Verfahrens jeweils in einer Aufnahme gehalten sind, und
- Figuren 3 und 4: zeigen in einer etwas konkreteren Darstellung den Aufbau der beiden Aufnahmen, jeweils mit eingelegten Rohrabschnittshälften.

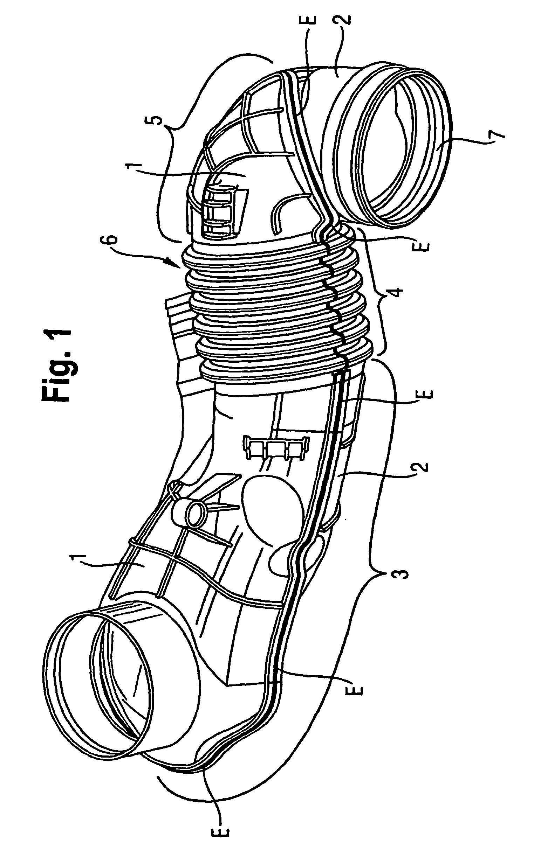

Wie bereits erwähnt, besteht das in Figur 1 dargestellte Ausführungsbeispiel eines Reinluftrohres aus einer Rohrabschnittshälfte 1 (in Figur 1 oben liegend) und einer Rohrabschnittshälfte 2 (in Figur 1 unten liegend), die in einer Ebene E miteinander verschweißt sind. Die Ebene E erstreckt sich über die gesamte Länge des Reinluftrohres und hat stellenweise aus konstruktiven Gründen einen unsteten Verlauf.

Die Rohrabschnittshälften 1 und 2 werden im bekannten Spritzgießverfahren getrennt voneinander hergestellt und bestehen jeweils aus Abschnitten aus Kunststoff mit unterschiedlicher Härte. So besteht die Rohrabschnittshälfte 1 aus einem Halbschalenabschnitt 3 aus hartem Kunststoff, einem sich daran anschließenden Halbschalenabschnitt 4 aus weichem Kunststoff (zur Bildung einer Hälfte des späteren Faltenbalges 6) sowie aus einem an diesen anschließenden Halbschalenabschnitt 5 aus hartem Kunststoff. Die Halbschalenabschnitte 3 und 5 bestehen bei dem dargestellten Rohrabschnitt aus demselben Kunststoffmaterial, so dass die Rohrabschnittshälfte 1 aus zwei Komponenten besteht.

Die in Figur 1 unten liegende Rohrabschnittshälfte 2 besteht ebenfalls aus einem Halbschalenabschnitt 3 aus hartem Kunststoff, einem daran anschließenden Halbschalenabschnitt 4 aus weichem Kunststoff (zur Bildung der zweiten Hälfte des späteren Faltenbalges 6) sowie aus einem an diesen anschließenden Halbschalenabschnitt 5 aus hartem Kunststoff.

Aufgrund der Lage der Ebene E umfasst die in Figur 1 unten liegende Rohrabschnittshälfte 2 im Bereich des freien Endes ihres Halbschalenabschnittes 5 einen Anschlussabschnitt 7 aus weichem Kunststoffmaterial, der eine flexible Manschette für die Ankopplung des Reinluftrohres an eine nicht dargestellte Rohrleitung bildet.

Die Rohrabschnittshälfte 2 besteht somit aus zwei Halbschalenabschnitten aus hartem Kunststoff, einem Halbschalenabschnitt 4 aus weichem Kunststoff sowie einem Anschlussabschnitt 7, der ebenfalls aus weichem Kunststoff geformt ist.

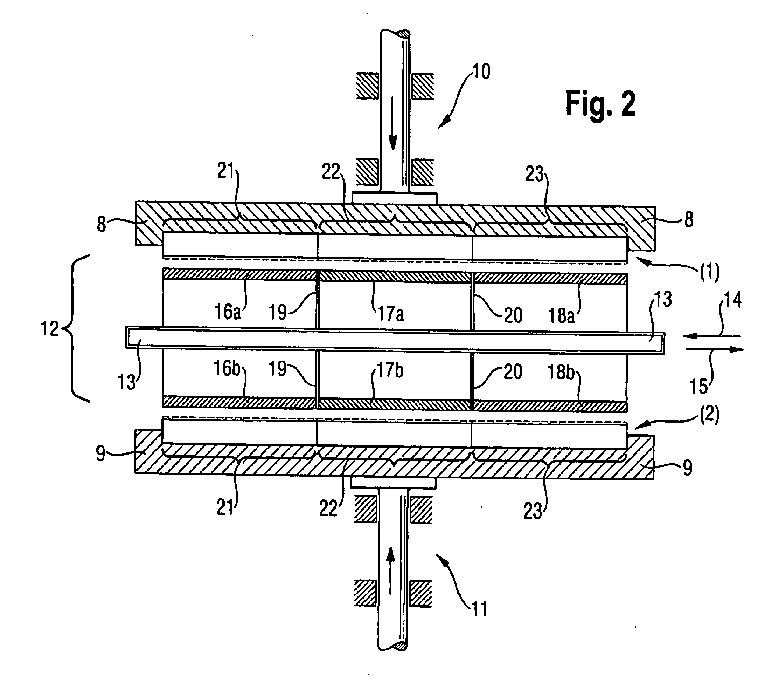

Die Vorrichtung gemäß Figur 2 umfasst eine obere Aufnahme 8 und eine untere Aufnahme 9. Sowohl die obere Aufnahme 8 als auch die untere Aufnahme 9 sind jeweils in Führungen 10 und 11 derart gehaltert, dass sie sowohl aufeinander zu als auch auseinander bewegt werden können, wie dies in Figur 2 schematisch angedeutet ist.

Die obere Aufnahme 8 ist auf ihrer Unterseite derart gestaltet, dass sie eine obere Rohrabschnittshälfte aufnehmen kann, wie dies schematisch in Figur 2 dargestellt ist.

Die untere Aufnahme 9 wiederum ist auf ihrer Oberseite derart gestaltet, dass eine untere Rohrabschnittshälfte eingesetzt werden kann.

Bei entsprechender Ausbildung kann die obere Aufnahme 8 beispielsweise die Rohrabschnittshälfte 1 und die untere Aufnahme 9 die Rohrabschnittshälfte 2 des Reinluftrohres gemäß Figur 1 aufnehmen. In der Vorrichtung sind die obere Aufnahme 8 und die untere Aufnahme 9 jeweils derart zueinander gehaltert und ausgerichtet, dass bei einem Zusammenfahren der oberen Aufnahme 8 mit der unteren Aufnahme 9 die beiden Rohrabschnittshälften im Bereich ihrer Verbindungsstellen in der Ebene E präzise aufeinander liegen, wie dies später im Zusammenhang mit dem Schweißvorgang noch beschrieben werden wird.

Wie bereits erwähnt, werden die in einem separaten Arbeitsgang hergestellten und aus Halbschalenabschnitten aus verschieden hartem Kunststoffmaterial bestehenden Rohrabschnittshälften in die obere Aufnahme 8 bzw. die untere Aufnahme 9 eingelegt und in der jeweiligen Aufnahme fixiert. In diesem Zustand sind die beiden Aufnahmen auseinandergefahren, so dass zwischen die beiden in den Aufnahmen gehaltenen Rohrabschnittshälften Schweißwerkzeuge 12 eingefahren werden können, wie dies schematisch in Figur 2 dargestellt ist. Die Schweißwerkzeuge sind auf einer Trägerplatte 13 befestigt, die entweder in Richtung des Pfeils 14 zwischen die Rohrabschnittshälften eingefahren oder in Richtung des Pfeils 15 aus dem Bereich der Rohrabschnittshälften und damit der Aufnahmen 8 und 9 herausgefahren werden kann. Die Trägerplatte 13 ist sowohl auf ihrer der oberen Rohrabschnittshälfte als auch der unteren Rohrabschnittshälfte zugewandten Seite jeweils mit Kontaktelementen 16, 17 und 18 ausgestattet, die unterschiedlich beheizt werden können und jeweils voneinander durch Isolierschichten 19 und 20 voneinander getrennt sind. Die einander zugeordneten Kontaktelemente (beispielsweise 16a und 16b bzw. 17a und 17b bzw. 18a und 18b) weisen jeweils die gleiche oder annähernd gleiche Temperatur auf. Die Temperatur der jeweils zugeordneten Kontaktelemente (beispielsweise 16a und 16b) ist dabei derart gewählt, dass sie der Schmelztemperatur des jeweils zugeordneten Halbschalenabschnittes der oberen bzw. unteren Rohrabschnittshälfte entspricht. Besteht beispielsweise der Abschnitt 21 der oberen Rohrabschnittshälfte und der unteren Rohrabschnittshälfte aus einem harten Kunststoffmaterial, so sind die Kontaktelemente 16a und 16b auf die Schmelztemperatur dieses harten Kunststoffmaterials im Abschnitt 21 eingestellt. Dies gilt auch für den Abschnitt 22, der beispielsweise aus weichem Kunststoffmaterial bestehen kann. Die zugeordneten Kontaktelemente 17a und 17b sind in einem solchen Fall auf die Schmelztemperatur des weichen Kunststoffmaterials des Abschnittes 22 eingestellt.

Der daran anschließende Abschnitt 23 kann beispielsweise wiederum aus hartem Kunststoffmaterial bestehen, auf dessen Schmelztemperatur die Kontaktelemente 18a und 18b eingestellt sind.

Ist die Trägerplatte 13 mit den Schweißwerkzeugen 12 eingefahren und in ihrer genauen Lage gegenüber den jeweils zugeordneten Abschnitten der oberen Rohrabschnittshälfte und der unteren Rohrabschnittshälfte fixiert worden, so werden die obere Aufnahme und die untere Aufnahme so weit zusammengefahren, dass die Kontaktelemente jeweils im zugeordneten Abschnitt im Bereich der Verbindungsstellen anliegen und auf diese Weise die Verbindungsstellen auf Schmelztemperatur gebracht werden. Dieser Vorgang erfolgt gleichzeitig für alle Verbindungsstellen, da erfindungsgemäß eine durchgehend gestaltete Ebene E in dem zu bearbeitenden Kunststoffform- bzw. Kunststoffhohlkörper vorgesehen ist.

Ist die Schmelztemperatur erreicht, werden die obere und die untere Aufnahme wieder auseinandergefahren und das Schweißwerkzeug 12 über die Trägerplatte 13 in Richtung des Pfeils 15 ausgefahren.

Ist dies abgeschlossen, so wird die obere Aufnahme mit der unteren Aufnahme wieder zusammengefahren, so dass die auf Schmelztemperatur gebrachten Verbindungsstellen miteinander in Kontakt geraten und der Schweißvorgang durch Aufbringen einer Presskraft vollzogen werden kann.

Nach einer vorgegebenen Zeit werden die beiden Aufnahmen wieder auseinandergefahren und der auf diese Weise hergestellte Kunststoffform- bzw. Kunststoffhohlkörper - im vorliegenden Fall das verschweißte Reinluftrohr - aus der Vorrichtung entnommen.

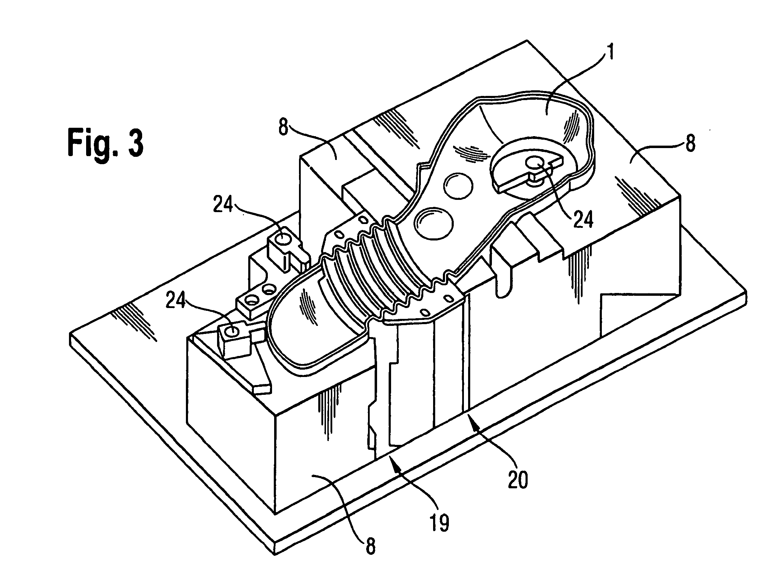

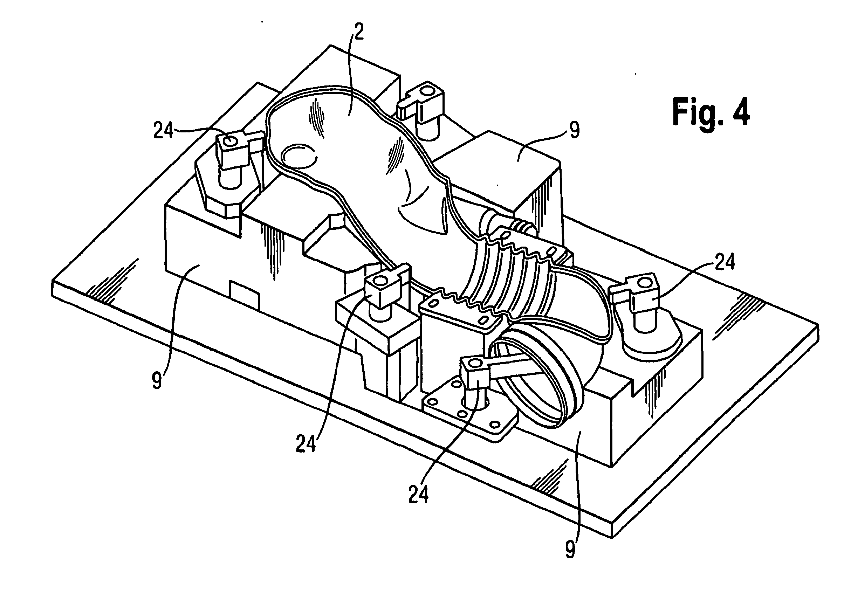

Wie bereits erwähnt, zeigen die Figuren 3 und 4 in einer etwas konkreteren Darstellung den Aufbau der oberen Aufnahme 8 (Figur 3) und der unteren Aufnahme 9 (Figur 4) für die Rohrabschnittshälften 1 und 2 des in Figur 1 dargestellten Reinluftrohres. Aufgrund der Form der Rohrabschnittshälften sind die Aufnahmen 8 und 9 wannenartig ausgebildet und weisen zumindest abschnittsweise die Negativform der aufzunehmenden Rohrabschnittshälften auf.

Wie bereits im Zusammenhang mit Figur 2 dargestellt, müssen die Aufnahmen aufeinander zu und voneinander weg bewegt werden. Um zu verhindern, dass bei dieser Bewegung die Rohrabschnittshälften ihre Lage in den Ausnehmungen der Aufnahmen verändern oder gar herausfallen, sind die Aufnahmen mit Spann- bzw. Halteelementen 24 ausgestattet, die für den Be- bzw. Entladevorgang, d.h. das Einlegen oder Entnehmen der Rohrabschnittshälften bzw. des fertigen Reinrohres jeweils ausschwenkbar innerhalb der Vorrichtung gelagert sind.

## Patentansprüche

1. Verfahren zum Verschweißen von zwei oder mehreren, in Spritzgießtechnik hergestellten Rohrabschnittshälften (1, 2) als Halbschalen zu einem Rohrabschnitt, vorzugsweise zur Ausbildung von Rohrabschnitten zur Luftführung für Brennkraftmaschinen, wobei die miteinander zu verbindenden Rohrabschnittshälften (1, 2) jeweils aus mindestens zwei Abschnitten (3, 4, 5) aus Kunststoff mit unterschiedlicher Härte und Schmelztemperatur bestehen,
wobei
die miteinander zu verschweißenden Rohrabschnittshälften (1, 2) im Bereich der Verbindungsstellen durch Anpressen von auf die Schmelztemperatur der jeweiligen Komponente erhitzten Kontaktelementen aufgeschmolzen und im Anschluss daran unter Einwirkung eines Pressdruckes zusammengeführt werden, wobei die Kontaktelemente während des Anpressens entsprechend der jeweiligen Komponente unterschiedliche Temperaturen aufweisen.

2. Vorrichtung zur Durchführung des Verfahrens nach Anspruch 1, wobei die in Mehrkomponentenspritzgießtechnik hergestellten und miteinander zu verschweißenden Rohrabschnittshälften (1, 2) als Halbschalen jeweils aus mindestens zwei Abschnitten (3, 4, 5) aus Kunststoff mit unterschiedlicher Härte und Schmelztemperatur bestehen, durch die Vorrichtung jeweils in einer Aufnahme (8, 9) im Abstand zueinander gehalten, auf unterschiedliche Schmelztemperaturen gebrachte Kontaktelemente (1 6a, 16b, 17a, 17b, 18a, 18b) jeweils gleichzeitig in den Bereich der Verbindungsstellen der Rohrabschnittshälften (1, 2) eingefahren und zur Anlage an den Verbindungsstellen gebracht werden, nach Abschluss des Aufschmelzvorganges ausgefahren und im Anschluss daran zum Zusammenfügen und zum Aufbringen der Presskraft die Aufnahmen (8, 9) zusammengefahren werden können.

3. Vorrichtung nach Anspruch 2, **dadurch gekennzeichnet, dass** zwischen den Kontaktelementen (16a, 16b, 17a, 17b, 18a, 18b) Isolierschichten (19, 20) angeordnet sind.

4. Vorrichtung nach Anspruch 2 oder 3, **dadurch gekennzeichnet, dass** die Aufnahmen (8, 9) block- oder wannenartig ausgebildet sind und auf ihren einander zugewandten Seiten Ausnehmungen aufweisen, die zumindest abschnittweise die Negativform der aufzunehmenden Rohrabschnittshälften (1, 2) aufweisen.

5. Vorrichtung nach Anspruch 4, **dadurch gekennzeichnet, dass** die Aufnahmen (8, 9) mit Spann- bzw. Halteelementen (24) für die zu verschweißenden Rohrabschnittshälften (1, 2) ausgestattet sind, die für den Be- bzw. Entladevorgang ausschwenkbar sind.

## Claims

1. A method for welding two or more pipe portion halves (1, 2) produced by the injection moulding method as half shells to form a pipe portion, preferably to form pipe portions for air guidance for internal combustion engines, wherein the pipe portion halves (1, 2) to be connected to one another in each case comprise at least two portions (3, 4, 5) made of plastics material with a different hardness and melt temperature,
wherein
the pipe portion halves (1, 2) to be welded to one another are melted in the region of the connecting points by pressing on contact elements heated to the melt temperature of the respective component and then brought together under the action of a forming pressure, the contact elements having different temperatures during the pressing on in accordance with the respective component.

2. A device for carrying out the method according to claim 1, wherein the pipe portion halves (1, 2) to be welded to one another and produced by the multicomponent injection moulding method comprise, in each case, as half shells, of at least two portions (3, 4, 5) made of plastics material with a different hardness and melt temperature, contact elements (16a, 16b, 17a, 17b, 18a, 18b) held by the device, in each case, in a receiver (8, 9) at a spacing from one another and brought to different melt temperatures are in each case simultaneously moved into the region of the connecting points of the pipe portion halves (1, 2) and made to abut the connecting points, on completion of the melting process moved out and following this, for joining and to apply the forming pressure, the receivers (8, 9) can be moved together.

3. A device according to claim 2, **characterised in that** insulating layers (19, 20) are arranged between the contact elements (16a, 16b, 17a, 17b, 18a, 18b).

4. A device according to claim 2 or claim 3, **characterised in that** the receivers (8, 9) are block-like or trough-like and, on their mutually facing sides, have recesses, which, at least in portions, have the negative form of the pipe portion halves (1, 2) to be received.

5. A device according to claim 4, **characterised in that** the receivers (8, 9) are equipped with clamping or holding elements (24) for the pipe portion halves (1, 2) to be welded, which can be pivoted out for the loading and unloading process.

## Revendications

1. Procédé de soudage de deux ou d'un plus grand nombre de demi-segments tubulaires (1, 2) obtenus par la technique de moulage par injection, sous la forme de demi-coquilles pour obtenir un segment tubulaire, de préférence pour la réalisation de segments tubulaires d'alimentation en air dans des moteurs à combustion interne, les demi-segments tubulaires (1, 2) devant être reliés les uns aux autres étant respectivement constitués par au moins deux segments (3, 4, 5) en des matériaux synthétiques ayant des duretés et des températures de fusion différentes, les demi-segments tubulaires (1, 2) devant être soudés les uns aux autres étant fondus dans la zone des emplacements de liaison par serrage d'éléments de contact chauffés à la température de fusion des composants respectifs puis réunis sous l'action d'une pression de serrage, les éléments de contact présentant pendant le serrage des températures différentes correspondant aux composants respectifs.

2. Dispositif permettant la mise en oeuvre du procédé conforme à la revendication 1, dans lequel les demi-segments tubulaires (1, 2) obtenus par la technique de moulage par injection multi-composants et devant être soudés les uns aux autres, réalisés sous la forme de demi-coquilles respectivement constituées d'au moins deux segments (3, 4, 5) en des matériaux synthétiques ayant des duretés et des température de fusion différentes sont respectivement maintenus par le dispositif à distance les uns des autres dans un logement de réception (8, 9) des éléments de contact (16a, 16b, 17a, 17b, 18a, 18b) amenés à des températures de fusion différentes, sont respectivement simultanément introduits dans la zone des emplacements de liaison des demi-sections tubulaires (1, 2) mis en appui au niveau des emplacements de liaison, et extraits après l'achèvement du processus de fusion, puis, pour permettre la jonction et l'application de la force de serrage, les logements de réception (8, 9) peuvent être déplacés l'un vers l'autre.

3. Dispositif conforme à la revendication 2,
**caractérisé en ce que**
des couches isolantes (19, 20) sont situées entre les éléments de contact (16a, 16b, 17a, 17b, 18a, 18b).

4. Dispositif conforme à la revendication 2 ou 3,
**caractérisé en ce que**
les logements de réception (8, 9) sont réalisés sous la forme de blocs ou de cuves et comportent sur leurs faces tournées l'une vers l'autre des cavités qui présentent au moins par segments la forme en négatif des demi-segments tubulaires (1, 2) à recevoir.

5. Dispositif conforme à la revendication 4,
**caractérisé en ce que**
les logements de réception (8, 9) sont équipés d'éléments de serrage ou de maintien (24) des demi-segments tubulaires (1, 2) à souder qui peuvent être déplacés par pivotement pour permettre le processus de charge ou d'extraction.
